# DEMANDE DE BREVET EUROPEEN

(11) **EP 2 316 678 A1**
(43) Date de publication de la demande: **04.05.2011**
(21) Numéro de dépôt: 10290589.0
(22) Date de dépôt: 02.11.2010
(51) Int. Cl.: B60J 1/00, B62D 65/06

(54) **Dispositif d'assistance pour la pose d'un pare-brise ou similaire**

(30) Priorité: 02.11.2009 FR 0957738
(71) Demandeur: Robotic Consulting S.A.R.L., 1541 Sevaz (CH); V.B.S.A. S.A.S., 88290 Saulxures sur Moselotte (FR)
(72) Inventeur: Passoni, Gianfranco, 1473 Chatillon (CH); Viola, Alberto, 88290 Saulxures sur Moselotte (FR); Viola, Cédric, 88290 Saulxures sur Moselotte (FR)
(74) Mandataire: Nithardt, Roland

(57) **Abrégé**

La présente invention concerne un dispositif d'assistance (10) pour le remplacement d'un pare-brise (11) ou similaire comportant une première ventouse (12) portée par un support coudé (13) et agencée pour être fixée à une vitre latérale (14) d'un véhicule, une tige (15) porte pare-brise portant une deuxième ventouse (16) agencée pour se fixer audit pare-brise à remplacer, ladite tige (15) porte pare-brise et ledit support coudé (13) comportant des moyens complémentaires pour assurer une liaison articulée, **caractérisé en ce qu**'il comporte une troisième ventouse (17) agencée pour se fixer également audit pare-brise, ladite troisième ventouse étant montée sur un support amovible (28) comportant des moyens d'accrochage agencés pour assurer une fixation manuelle momentanée dudit support amovible à ladite tige (15) porte pare-brise .

## Description

### Domaine technique

La présente invention concerne un dispositif d'assistance pour le remplacement d'un pare-brise ou similaire comportant une première ventouse portée par un support coudé et agencée pour être fixée à une vitre latérale d'un véhicule, une tige porte pare-brise portant une deuxième ventouse agencée pour se fixer audit pare-brise à remplacer, ladite tige porte pare-brise et ledit support coudé comportant des moyens complémentaires pour assurer une liaison articulée.

### Technique antérieure

On connait déjà de nombreuses réalisations de dispositifs permettant de remplacer un pare-brise défectueux. L'opération consiste habituellement à déposer le pare-brise défectueux, ayant par exemple subi un impact et qui est fissuré, et de poser un pare-brise neuf préalablement encollé. Étant donné que les pare-brises sont lourds, encombrants donc difficiles à manipuler, les garagistes ou autres spécialistes de la rénovation et/ou du remplacement d'un pare-brise sont équipés de dispositifs d'assistance qui permettent, de préférence à une personne seule, d'effectuer toutes les opérations requises en un minimum de temps. Ces dispositifs comportent tous des ventouses agencées pour fixer un support d'appui sur une vitre latérale d'un véhicule et définissant une articulation pour un support à ventouses qui porte le pare-brise.

Ces supports sont souvent encombrants, lourds et difficiles à manipuler parce que leurs articulations présentent un nombre limité de degrés de libertés. De ce fait, les deux opérations d'enlèvement de l'ancien pare-brise et de mise en place du nouveau pare-brise ne peuvent souvent pas être faites par une seule personne, sachant que le nouveau pare-brise doit être tourné pour exposer son bord intérieur en vue de recevoir un bourrelet de colle, puis retourné pour être appliqué dans le cadre du logement approprié de la carrosserie.

Pour mener ces opérations à bien il est indispensable que le pare-brise puisse être manipulé, tourné et retourné, déplacé selon tous les axes et pivoté dans toutes les directions pour se positionner parallèlement au cadre du logement récepteur, puis engagé dans ce logement et plaqué contre le cadre sous une pression prédéterminée en attendant la fixation définitive après le séchage de la colle.

Les dispositifs actuels ne répondent pas toujours à ce cahier des charges et ne permettent pas, pour une personne seule, de maîtriser l'ensemble des démarches dans des conditions de travail et de sécurité acceptables.

### Exposé de l'invention

La présente invention se propose de pallier les inconvénients et les déficiences des dispositifs connus de l'art antérieur en offrant un dispositif d'assistance pour permettre à un opérateur travaillant seul d'enlever un pare-brise défectueux et de mettre en place un pare-brise neuf dans des conditions de travail et de sécurité acceptables pour garantir la qualité de la pose, c'est-à-dire la tenue mécanique, l'absence de contraintes dangereuses, l'étanchéité de la fermeture, etc.

L'invention a également pour objectif de proposer une solution permettant une mise en oeuvre sécurisée et fiable d'un tel dispositif d'assistance, quel que soit le modèle de véhicule concerné, y compris un cabriolet.

Dans ce but, le dispositif d'assistance pour le remplacement d'un pare-brise ou similaire de la présente invention, tel que défini en préambule, est caractérisé en ce qu'il comporte une troisième ventouse agencée pour se fixer également audit pare-brise, ladite troisième ventouse étant montée sur un support amovible comportant des moyens d'accrochage agencés pour assurer une fixation manuelle momentanée dudit support amovible à ladite tige porte pare-brise.

Ledit support coudé comporte avantageusement un oeillet solidaire d'une extrémité d'un de ses bras et ladite tige porte pare-brise comporte de préférence un crochet monté à une de ses extrémités, ledit crochet étant agencé pour être accroché manuellement audit oeillet pour suspendre ladite tige audit support coudé.

De façon avantageuse, ladite deuxième ventouse est montée sur un manchon coulissant le long de ladite tige porte pare-brise et rotatif autour de l'axe de cette tige.

Préférentiellement, ladite deuxième ventouse est fixée audit manchon coulissant par l'intermédiaire d'une rotule sphérique.

Selon une forme de réalisation particulièrement avantageuse, lesdits moyens d'accrochage dudit support amovible de ladite troisième ventouse comportent un organe de verrouillage pour bloquer ledit support amovible en position accrochée sur ladite tige porte pare-brise.

Ledit support coudé portant ladite première ventouse est avantageusement pourvu d'un manchon coulissant le long d'une de ses branches et rotatif autour de l'axe de ladite branche.

De préférence, ladite tige porte pare-brise a une section circulaire et comporte au moins deux segments dont un au moins est rotatif par rapport à leur axe commun.

Avantageusement, ladite tige porte pare-brise comporte une poignée de maintien à l'extrémité opposée à celle qui porte ledit crochet de fixation dans ledit oeillet.

Lesdits segments de ladite tige porte pare-brise ont de préférence la même section circulaire.

Conformément à une variante de réalisation additionnelle, ledit support coudé comporte en outre un bras de renfort agencé pour être relié à une surface d'appui.

Dans ce cas, selon une première solution, ledit bras de renfort comporte une quatrième ventouse agencée pour se fixer à un élément de carrosserie, et est de préférence équipé d'un manchon coulissant le long dudit bras de renfort et rotatif autour de l'axe dudit bras de renfort portant ladite quatrième ventouse.

Selon une deuxième solution, le bras de renfort est avantageusement télescopique et comporte au moins deux parties agencées pour coulisser l'une par rapport à l'autre, l'une desdites parties étant reliée audit support coudé tandis que l'autre partie comporte un socle agencé pour prendre appui sur le sol.

Avantageusement, ledit bras de renfort comporte en outre une poignée de manipulation, et est préférentiellement relié audit support coudé par des moyens d'assemblage amovibles, lesquels comportent un embout dont une extrémité présente une gorge agencée pour accueillir ledit support coudé tandis que ledit bras de renfort est monté pivotant sur l'autre extrémité.

### Description sommaire des dessins

La présente invention et ses avantages apparaîtront mieux dans la description suivante de plusieurs modes de réalisation donnés à titre d'exemples non limitatifs, en référence aux dessins annexés, dans lesquels :
- la figure 1 représente une vue générale en perspective du dispositif de l'invention, montrant l'ensemble de ses composants,
- la figure 2A représente une vue en perspective du dispositif selon l'invention au cours d'une première phase d'enlèvement d'un pare-brise défectueux à remplacer,
- la figure 2B représente une vue en perspective du dispositif selon l'invention au cours d'une deuxième phase d'enlèvement d'un pare-brise défectueux à remplacer,
- la figure 2C représente une vue en perspective du dispositif selon l'invention au cours d'une troisième phase d'enlèvement d'un pare-brise défectueux à remplacer,
- la figure 3 est une vue en perspective du dispositif selon l'invention au cours d'une phase de préparation de la mise en place du pare-brise de remplacement,
- la figure 4 est une vue en perspective du dispositif selon l'invention au cours d'une phase d'encollage du bord du pare-brise de remplacement,
- la figure 5 est une vue en perspective du dispositif selon l'invention au cours d'une phase de mise en place finale du pare-brise de remplacement,
- la figure 6 est une vue générale en perspective d'un second mode de réalisation du dispositif selon l'invention, et
- la figure 7 est une vue générale en perspective d'un troisième mode de réalisation du dispositif selon l'invention.

### Meilleures manières de réaliser l'invention

En référence aux figures, le dispositif d'assistance 10 pour le remplacement d'un pare-brise 11 ou similaire comporte une première ventouse 12 portée par un support coudé 13 et agencée pour être fixée à une vitre latérale 14 d'un véhicule (non représenté), une tige porte pare-brise 15 portant une deuxième ventouse 16 agencée pour se fixer sur la surface extérieure dudit pare-brise 11, ainsi qu'une troisième ventouse 17 agencée pour se fixer également à la surface extérieure dudit pare-brise 11.

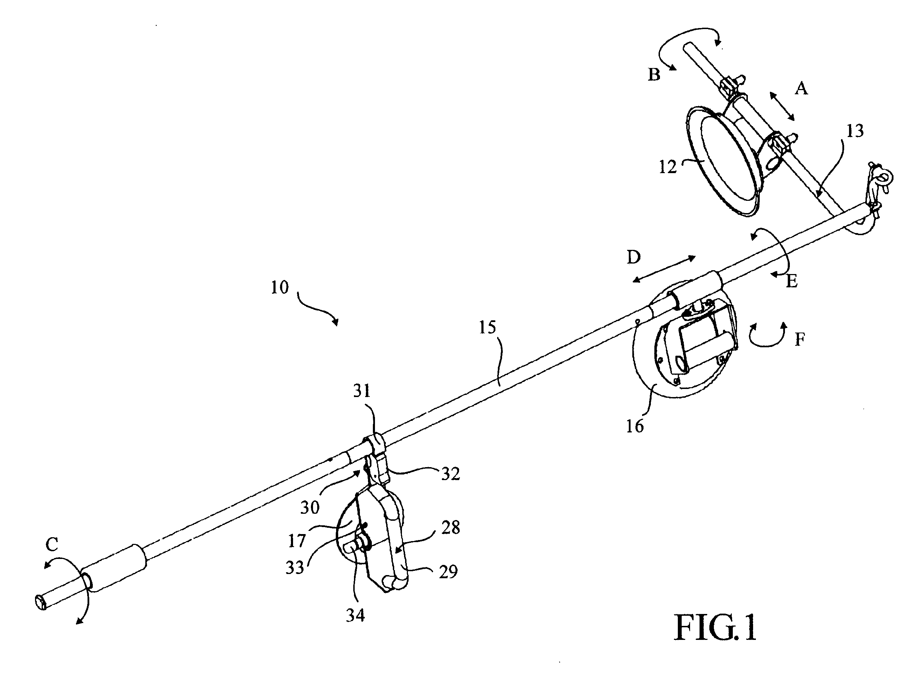

La première ventouse 12 est portée par un bâti 18 agencé pour coulisser sur le bras inférieur 19 du support coudé 13. Etant donné que le bras inférieur 19, au moins du support coudé 13, est de section circulaire, le bâti 18 peut également pivoter autour de ce bras inférieur 19 pour être amené dans une position dans laquelle ladite première ventouse 12 s'applique contre la vitre latérale 14. Pour faciliter son déplacement en translation, selon la double flèche A et/ou son pivotement, selon la double flèche B (cf. fig. 1), le bâti 18 de ladite première ventouse 12 est équipé d'une poignée de manipulation 20, disposée sensiblement parallèlement au bras inférieur 19. Un manchon coulissant 18a permet son déplacement en translation. Un organe de blocage par serrage 21 est associé au bâti 18 pour fixer et maintenir la première ventouse 12 en position sur le bras inférieur 19 du support coudé 13. Le support coudé 13 est de préférence une tige en forme de L qui comprend ledit bras inférieur 19 et un bras supérieur, disposé sensiblement à 90° par rapport au bras inférieur 19 et dont l'extrémité libre se termine par un oeillet 22 dont la fonction est de porter un crochet 23 solidaire d'une extrémité de la tige porte pare-brise 15 en vue de supporter et d'articuler cette dernière par rapport audit support coudé 13.

La tige 15 est constituée d'au moins deux segments 15a et 15b, mais de préférence de trois segments 15a, 15b et 15c accouplés de manière à former une tige continue de section circulaire constante. Les segments de tige s'emboitent de manière à former une tige continue sur laquelle le manchon porte ventouse peut coulisser. L'avantage de cette construction est de réduire la longueur totale de la tige porte pare-brise 15 et de faciliter son transport et son rangement dans un coffret approprié, non représenté. L'extrémité opposée au crochet 23 porte une poignée de maintien sous la forme d'un manchon 24 en vue de permettre à un utilisateur de saisir la tige pour la déplacer, notamment autour du point de pivotement constitué du crochet 23 et de l'oeillet 22, comme le montre la flèche double C (cf. fig.1).

La deuxième ventouse 16 est montée sur un support 25 porté par un manchon coulissant 26 qui peut se déplacer en translation, comme le montre la double flèche D et en rotation, comme le montre la double flèche E, sur la tige porte pare-brise 15 (cf. fig. 1). Le support 25 est couplé au manchon coulissant 26 par une rotule sphérique 27 qui permet à la deuxième ventouse 16 de prendre n'importe quelle position et n'importe quelle orientation par rapport à ladite tige porte pare-brise 15, comme le montre la double flèche F. De cette manière le pare-brise attaché à la deuxième ventouse 16 présente une mobilité totale qui permet à l'opérateur de l'amener dans toutes les positions requises.

La troisième ventouse 17 est montée sur un support amovible 28 comportant essentiellement une poignée 29 et des moyens d'accrochage 30 agencés pour accrocher manuellement ledit support amovible 28 à ladite tige porte pare-brise 15 et le décrocher si nécessaire, à la fin de l'opération. Les moyens d'accrochage 30 comprennent un crochet 31 et un cliquet de blocage 32, pivotant sur un axe 33 pour maintenir le crochet sur la tige porte pare-brise 15. La troisième ventouse 17 est associée à une pompe à vide 34 comprenant un piston actionné par un poussoir latéral, pour assurer la fixation de cette ventouse contre la surface du pare-brise 11.

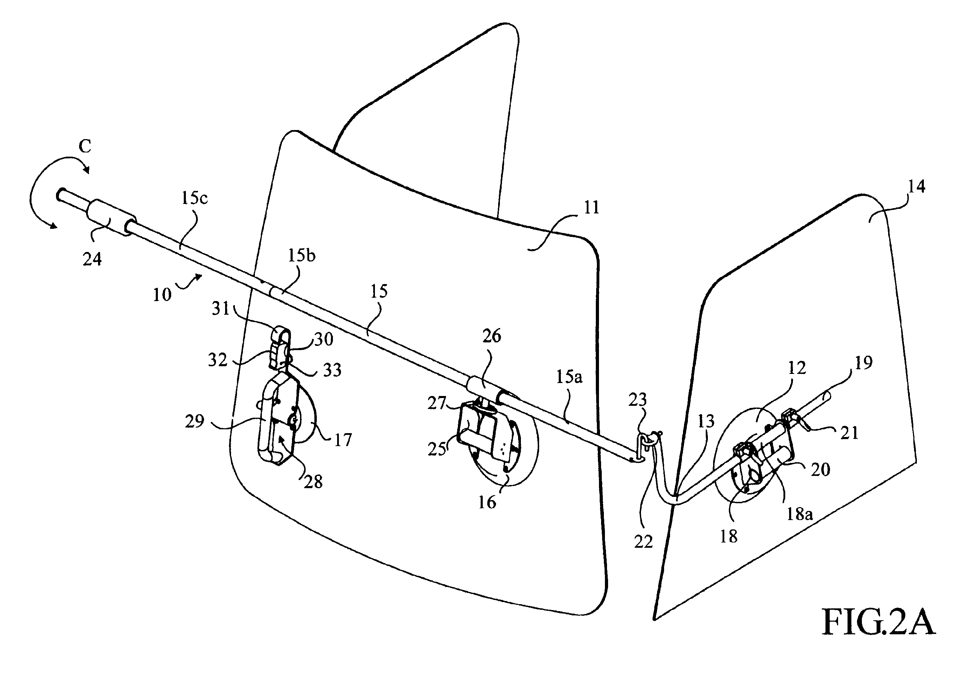

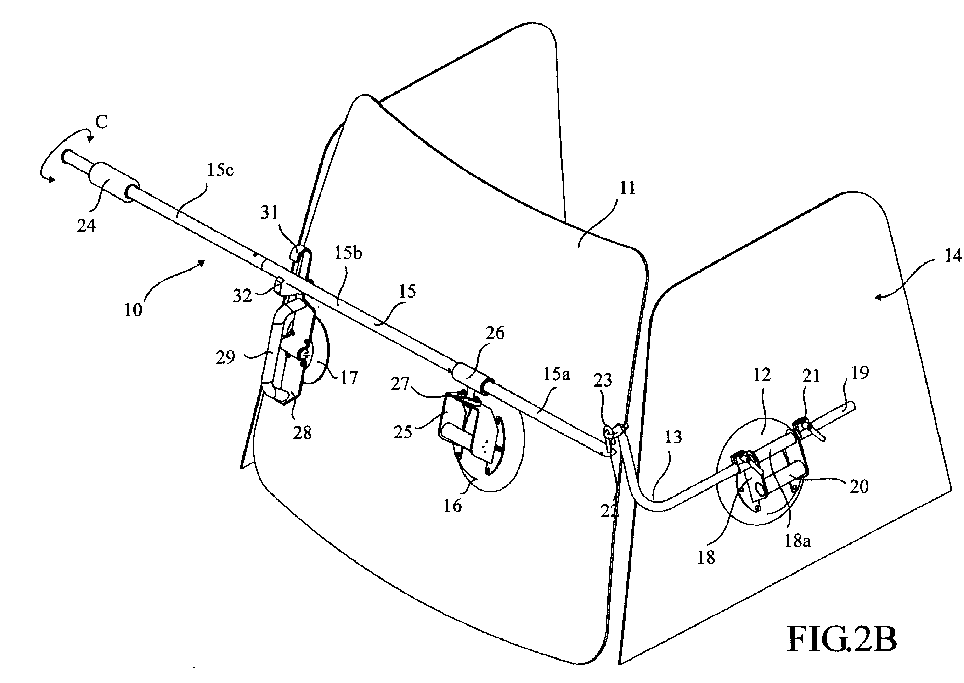

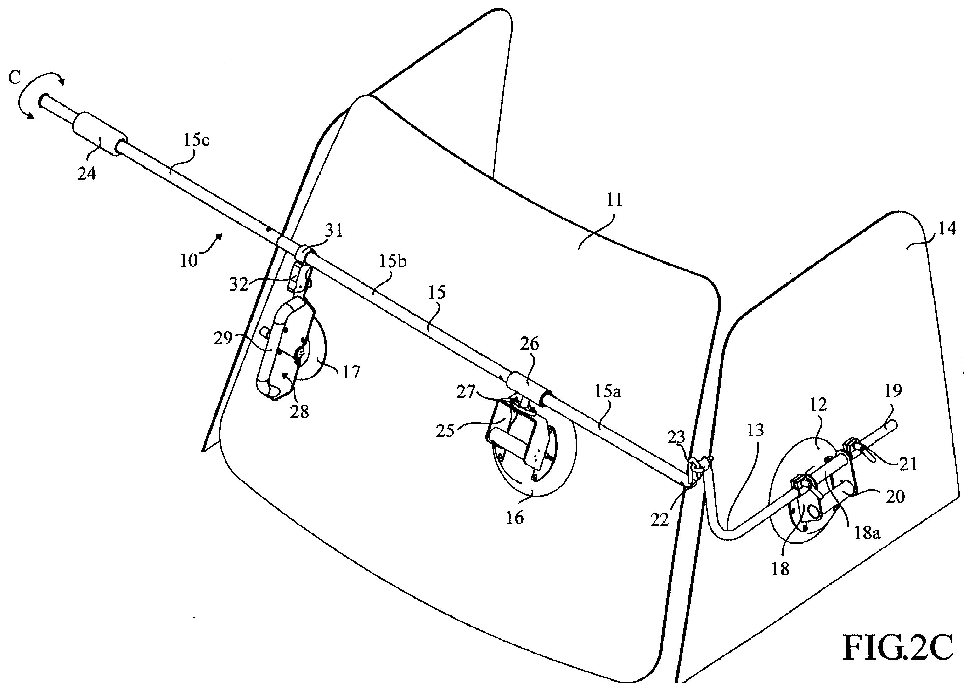

La vue de la figure 2A correspond à une première étape en vue de la dépose d'un pare-brise défectueux 11. L'opérateur accroche la tige porte pare-brise 15 au support coudé 13, en engageant le crochet 23 dans l'oeillet 22, puis il descend la tige porte pare-brise 15 en abaissant la poignée 24 pour l'amener sous le crochet 31, après avoir ouvert le cliquet de blocage 32, de la troisième ventouse 17. Cette deuxième phase est représentée par la figure 2B. La phase suivante représentée par la figure 2C consiste à bloquer en position la tige porte pare-brise 15 dans le crochet 31 au moyen du cliquet de blocage 32 relevé en position fermée.

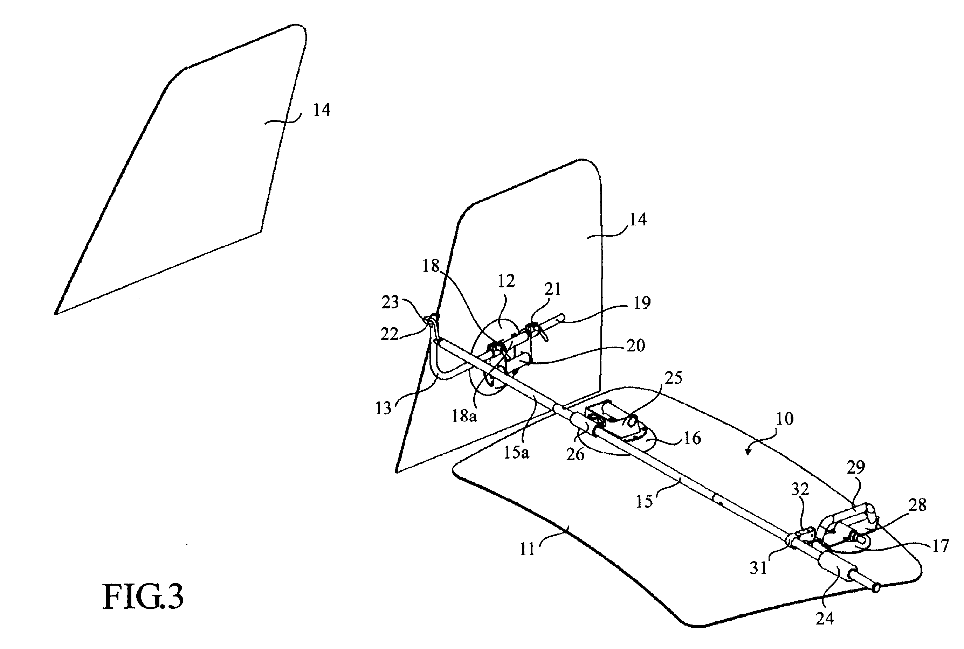

Dans cette position, le pare-brise 11 est bien tenu par la tige porte pare-brise 15 et peut être manipulé par un seul opérateur qui le dépose, après avoir détaché le joint de colle qui le maintient dans le cadre de la carrosserie, en faisant pivoter l'ensemble tige et pare-brise autour du point de pivotement défini par le crochet 23 engagé dans l'oeillet 22. Le bras de levier lui permet de soutenir le pare-brise 11 malgré le poids important de ce dernier. L'opérateur le dépose de préférence à plat sur une table ou similaire (non représentée), de telle manière que la deuxième ventouse 16 et la troisième ventouse 17 se trouvent au-dessus, comme le montre la figure 3. Il peut alors libérer le pare-brise 11 en laissant pénétrer l'air dans les ventouses. Le pare-brise 11 défectueux peut être retiré et évacué.

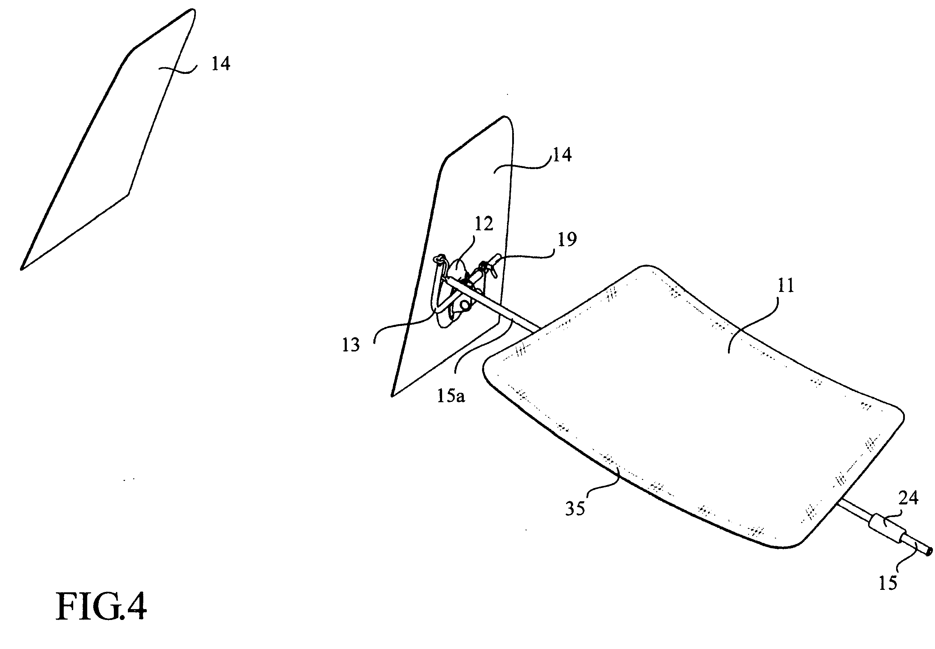

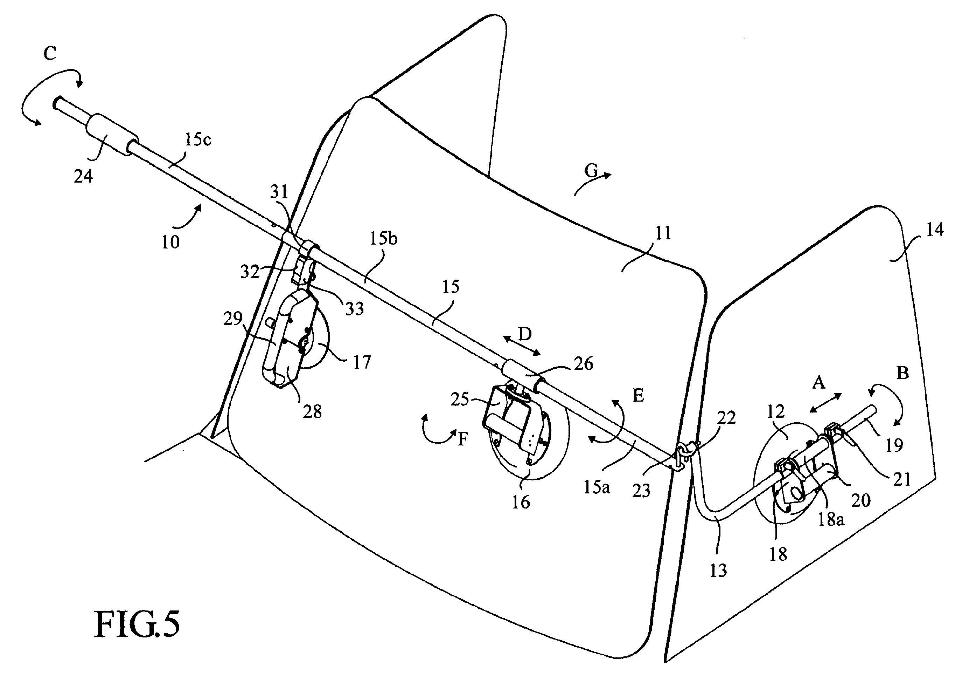

La vue de la figure 3 représente également la phase initiale de remplacement du pare-brise défectueux par un nouveau pare-brise. Plus précisément, le nouveau pare-brise 11 est positionné à l'envers sur une table ou un support plan et les deuxième et troisième ventouses 16 et 17 sont fixées sur sa surface. Ensuite le pare-brise 11 est retourné par pivotement autour de la tige porte pare-brise 15, comme le montre la figure 4, et il est à nouveau couché à plat sur le support. Dans cette position l'opérateur dépose un ruban de colle 35 sur tout le pourtour du pare-brise 11. Ensuite l'opérateur soulève le pare-brise 11 au moyen de la poignée 24 de la tige porte pare-brise 15 et amène le pare-brise 11 par pivotement autour du point de pivotement défini par le crochet 23 et l'oeillet 22 à proximité de l'ouverture appropriée de la carrosserie. De manière préférentielle, le pare-brise 11 est positionné de telle sorte que sa base repose contre la cadre, puis il est basculé dans le sens de la flèche G, comme le montre la figure 5, pour prendre appui contre toute la surface du cadre. Lorsqu'il est complètement mis en place, il est appliqué sous pression jusqu'à ce que la colle soit sèche.

On notera que toutes les opérations peuvent être effectuées simplement par un opérateur unique capable de manipuler le pare-brise dans toutes les positions, en le retournant, en le déplaçant latéralement et en assurant tout son poids avec une seule main. Les ventouses 12, 16 et 17 sont montées sur des supports 18, 25, 28 dont la mobilité est assurée par des pivots, des articulations et des rotules qui leur donnent un grand nombre de degrés de liberté. La tige porte pare-brise 15 est de section circulaire, ce qui permet au support 25 de la deuxième ventouse 16 de coulisser et de pivoter sur toute sa longueur.

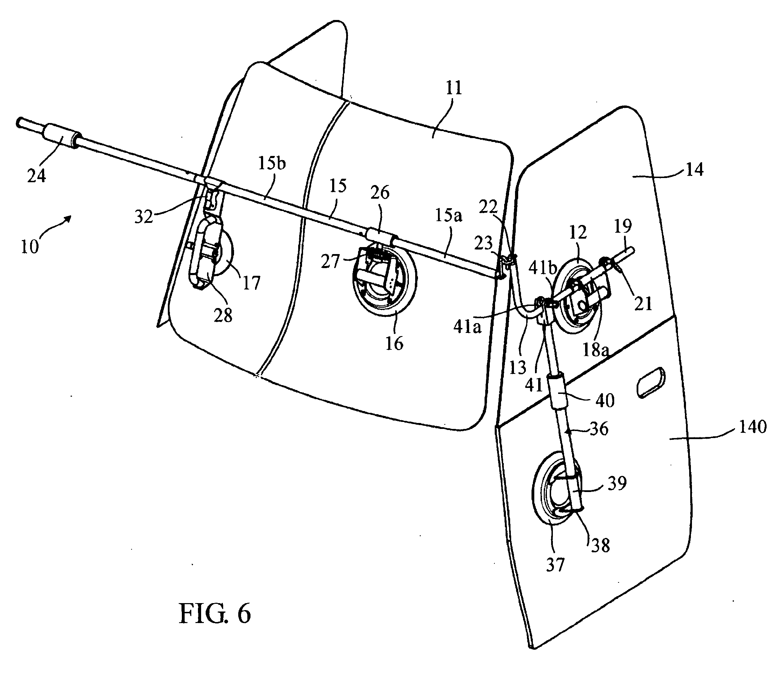

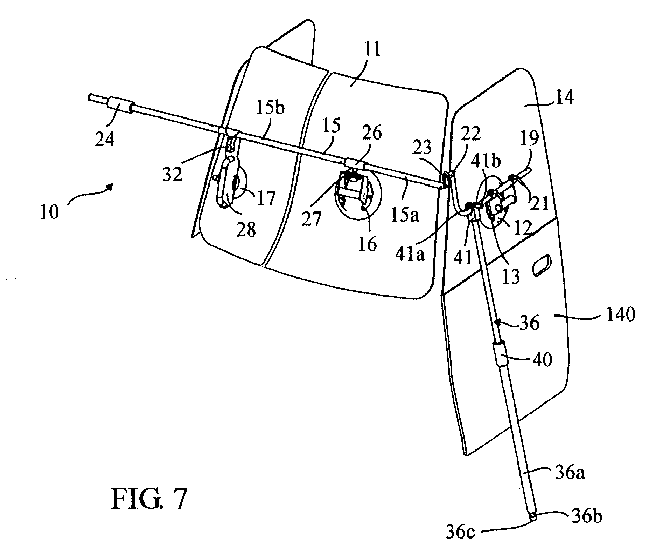

En référence aux figures 6 et 7, le support coudé 13 comporte en outre un bras de renfort 36 agencé pour être relié à une surface d'appui. Une telle caractéristique est particulièrement avantageuse dans le cadre d'une mise en oeuvre du dispositif d'assistance 10 selon l'invention pour le remplacement du pare-brise 11 d'un véhicule de type cabriolet. Elle permet en effet de pallier une éventuelle insuffisance de stabilité des vitres latérales 14 de tels véhicules dont les bords supérieurs sont classiquement dépourvus de cadre.

Dans la variante de réalisation représentée à la figure 6, le bras de renfort 36 présente une section circulaire et comporte une quatrième ventouse 37 agencée pour se fixer à un élément de carrosserie, tel que, dans l'exemple illustré, la portière 140 supportant la vitre latérale 14. Tout autre élément de carrosserie situé à proximité de ladite vitre latérale 14 peut néanmoins convenir. La quatrième ventouse 37 est montée sur un bâti 38, comportant un manchon 39 agencé pour coulisser le long du bras de renfort 36 et pivoter autour de l'axe de ce dernier. Ceci permet d'adapter le positionnement de la quatrième ventouse 37 sur la portière 140, avec un nombre élevé de degrés de liberté. Un organe de blocage par serrage (non représenté) est associé au bâti 38 pour fixer et maintenir la quatrième ventouse 37 en position. Le manchon 39 peut également être prévu fixe par rapport au bras de renfort 36, lui-même prévu dans ce cas au moins pivotant par rapport au support coudé 13.

Dans la variante de réalisation représentée à la figure 7, le bras de renfort 36 est télescopique et comporte au moins deux parties 36a, 36b agencées pour coulisser l'une par rapport à l'autre. La partie 36a est reliée au support coudé 13 tandis que la partie 36b comporte un socle 36c agencé pour prendre appui sur le sol une fois ladite partie 36b suffisamment déployée.

Dans les deux variantes de réalisation qui viennent d'être décrites, le bras de renfort 36 comporte par ailleurs une poignée 40 permettant de faciliter sa manipulation. Il est relié au support coudé 13 au moyen d'un embout amovible 41 comportant une gorge 41 a agencée pour accueillir le bras inférieur 19 dudit support coudé 13. L'embout amovible 41 peut par conséquent être déplacé le long du bras inférieur 19 entre la première ventouse 12 et le coude formé par le support coudé 13. Il est serré et maintenu en position par exemple au moyen d'une vis 41 b ou de tout autre organe de serrage équivalent. Selon une caractéristique additionnelle, le bras de renfort 36 peut en outre être monté pivotant par rapport à l'embout 41.

Il ressort clairement de cette description que l'invention permet d'atteindre les buts fixés, à savoir un dispositif très simple permettant à un seul opérateur de remplacer un pare-brise sans aucune difficulté particulière et sans contrainte.

La présente invention n'est pas limitée à l'exemple de réalisation décrit mais s'étend à toute modifcation et variante évidentes pour un homme du métier tout en restant dans l'étendue de la protection définie dans les revendications annexées.

## Revendications

1. Dispositif d'assistance (10) pour le remplacement d'un pare-brise (11) ou similaire comportant une première ventouse (12) portée par un support coudé (13) et agencée pour être fixée à une vitre latérale (14) d'un véhicule, une tige (15) porte pare-brise portant une deuxième ventouse (16) agencée pour se fixer audit pare-brise à remplacer, ladite tige (15) porte pare-brise et ledit support coudé (13) comportant des moyens complémentaires pour assurer une liaison articulée, **caractérisé en ce qu'**il comporte une troisième ventouse (17) agencée pour se fixer également audit pare-brise, ladite troisième ventouse étant montée sur un support amovible (28) comportant des moyens d'accrochage agencés pour assurer une fixation manuelle momentanée dudit support amovible à ladite tige (15) porte pare-brise .

2. Dispositif selon la revendication 1, **caractérisé en ce que** ledit support coudé (13) comporte un oeillet (22) solidaire d'une extrémité d'un de ses bras et **en ce que** ladite tige (15) porte pare-brise comporte un crochet (23) monté à une de ses extrémités, ledit crochet étant agencé pour être accroché manuellement audit oeillet pour suspendre ladite tige audit support coudé.

3. Dispositif selon l'une des revendications 1 ou 2, **caractérisé en ce que** ladite deuxième ventouse (16) est montée sur un manchon (26) coulissant le long de ladite tige (15) porte pare-brise et rotatif autour de l'axe de cette tige.

4. Dispositif selon la revendication 3, **caractérisé en ce que** ladite deuxième ventouse (16) est fixée audit manchon (26) coulissant par l'intermédiaire d'une rotule sphérique (27).

5. Dispositif selon la revendication 1, **caractérisé en ce que** lesdits moyens d'accrochage dudit support amovible (28) de ladite troisième ventouse (17) comportent un organe de verrouillage (32) pour bloquer ledit support amovible en position accrochée sur ladite tige (15) porte pare-brise.

6. Dispositif selon l'une quelconque des revendications précédentes, **caractérisé en ce que** ledit support coudé (13) portant ladite première ventouse (12) est pourvu d'un manchon coulissant (18a) le long d'une de ses branches (19) et rotatif autour de l'axe de ladite branche.

7. Dispositif selon l'une quelconque des revendications précédentes, **caractérisé en ce que** ladite tige (15) porte pare-brise a une section circulaire et comporte au moins deux segments (15a, 15b) dont un au moins est rotatif par rapport à leur axe commun.

8. Structure modulaire selon la revendication 2, **caractérisé en ce que** ladite tige (15) porte pare-brise comporte une poignée de maintien (24) à l'extrémité opposée à celle qui porte ledit crochet (23) de fixation dans ledit oeillet (22).

9. Dispositif selon la revendication 7, **caractérisé en ce que** lesdits segments (15a, 15b) de ladite tige (15) porte pare-brise ont la même section circulaire.

10. Dispositif selon l'une quelconque des revendications précédentes, **caractérisé en ce que** ledit support coudé (13) comporte un bras de renfort (36) agencé pour être relié à une surface d'appui.

11. Dispositif selon la revendication 10, **caractérisé en ce que** ledit bras de renfort (36) comporte une quatrième ventouse (37) agencée pour se fixer à un élément de carrosserie (140).

12. Dispositif selon l'une quelconque des revendications 10 ou 11, caractérisé eh ce que ledit bras de renfort (36) comporte un manchon (39) portant ladite quatrième ventouse (37), ledit manchon (39) étant coulissant le long dudit bras de renfort (36) et rotatif autour de l'axe dudit bras de renfort (36).

13. Dispositif selon la revendication 10, **caractérisé en ce que** ledit bras de renfort (36) est télescopique et comporte au moins deux parties (36a, 36b) agencées pour coulisser l'une par rapport à l'autre, l'une desdites parties (36a) étant reliée audit support coudé (13) tandis que l'autre partie (36b) comporte un socle (36c) agencé pour prendre appui sur le sol.

14. Dispositif selon la revendication 13, **caractérisé en ce que** ledit bras de renfort (36) comporte une poignée de manipulation (40).

15. Dispositif selon l'une quelconque des revendications 10 à 14, **caractérisé en ce que** ledit bras de renfort (36) est relié audit support coudé (13) par des moyens d'assemblage amovible.

16. Dispositif selon la revendication 15, **caractérisé en ce que** lesdits moyens d'assemblage amovibles comportent un embout (41) dont une extrémité présente une gorge (41 a) agencée pour accueillir ledit support coudé, tandis que (13) ledit bras de renfort (36) est monté pivotant sur l'autre extrémité.
